# EUROPÄISCHE PATENTSCHRIFT

(11) **EP 1 145 053 B1**
(45) Veröffentlichungstag und Bekanntmachung des Hinweises auf die Patenterteilung: **23.10.2002**
(21) Anmeldenummer: 99924970.9
(22) Anmeldetag: 14.05.1999
(51) Int. Cl.: G02B 6/00

(54) **LICHTWELLENLEITER-STECKERHÜLSEN-VERBUND**
OPTICAL WAVEGUIDE-FEMALE CONNECTOR INTERCONNECTION
ENSEMBLE GUIDE D'ONDE LUMINEUSE-CONTACT FEMELLE

(30) Priorität: 15.05.1998 DE 19822005
(43) Veröffentlichungstag der Anmeldung: 17.10.2001
(73) Patentinhaber: Lisa Dräxlmaier GmbH, 84137 Vilsbiburg (DE)
(72) Erfinder: BAYERSDORFER, Bernhard, D-84171 Baierbach (DE); NIRSCHL, Michael, D-84144 Geisenhausen (DE); KERBER, Alfred, D-84164 Dornwang (DE)
(74) Vertreter: HOFFMANN - EITLE
(86) Internationale Anmeldenummer: EP9903317
(87) Internationale Veröffentlichungsnummer: WO99060432

(56) Entgegenhaltungen:
- EP-A- 0 152 225
- DE-A- 2 926 575
- DE-U- 29 709 602
- FR-A- 2 421 395
- PATENT ABSTRACTS OF JAPAN vol. 010, no. 041 (P-429), 18. Februar 1986 (1986-02-18) & JP 60 186811 A (TOYOTA JIDOSHA KK;OTHERS: 01), 24. September 1985 (1985-09-24)

## Beschreibung

### Technisches Gebiet

Die Erfindung betrifft einen Lichtwellenleiter-Steckerhülsen-Verbund, der den Übergang eines Lichtwellenleiters (nachfolgend auch mit LWL abgekürzt) in einen Verbindungsstecker, Kopplungsstecker oder dergleichen realisiert.

### Stand der Technik

Etwa in der Automobiltechnik besteht zunehmendes Interesse am Einsatz von LWL. Hier sind jedoch besondere Anforderungen zu erfüllen, z.B. was mechanische Beanspruchungen, fertigungstechnische Gesichtspunkte, Kosten etc. anbelangt. Daher werden in diesem Bereich polymeroptische LWL, d.h. Kunststoff-LWL z.B. aus PMMA, gegenüber Glasfaser-LWL bevorzugt.

Ein Problem beim Einsatz von LWL besteht in der Realisierung eines Übergangs vom LWL in einen Stecker. Der LWL muß an seinem Endbereich sicher gefaßt werden, um eine hohe Zugfestigkeit für die LWL-Anbindung zu erzielen. Weiterhin ist eine genaue Positionierung des LWL-Endbereichs im Stecker erforderlich, um eine gute Übertragung des optischen Signals zu gewährleisten. Ferner soll die Anbindung des LWL eine möglichst geringe optische Dämpfung mit sich bringen. Darüber hinaus soll die Konfektionierung von LWL mit Steckern möglichst automatisierbar sein und kostengünstig erfolgen.

Aus dem deutschen Gebrauchsmuster DE 297 09 602 U1 sowie der JP 60186811 ist eine Faserendhülse für einen Polymerfaser-Lichtwellenleiter bekannt, die durch Crimpung auf dem LWL befestigt wird. Die Faserendhülse ist in ihrer Innenbohrung im Crimpbereich mit umlaufenden Vertiefungen versehen. Diese Vertiefungen bewirken infolge der Crimp-Verformung eine formschlüssige Verbindung, und zwar entweder zwischen Endhülse und LWL-Ummantelung oder zwischen Endhülse und LWL-Faserkern, wobei dann die Ummantelung im Crimpbereich zuvor abisoliert wurde.

Bei der Crimpung auf die Ummantelung besteht jedoch das Problem, daß es zwischen Faserkern und Ummantelung zu einem sogenannten Pistoning kommen kann, d.h. zu einem Wandern des Faserkerns innerhalb der Ummantelung. Dadurch ist die genaue Positionierung der stirnseitigen Endfläche des LWL-Faserkerns nicht mehr gewährleistet, was zu entsprechenden optischen Übertragungsproblemen führt. Bei der direkten Crimpung auf die zur Totalreflexion des Lichtsignals erforderliche Grenzschicht des Faserkerns, das sogenannte Cladding, ergibt sich folgende Schwierigkeit. Bei entsprechender Crimptiefe erhält man durch die formschlüssige Verbindung zwar eine ausreichende Zugfestigkeit, beschädigt dabei jedoch zwangsläufig das Cladding, was eine entsprechende optische Dämpfungszunahme und somit eine Beeinträchtigung der optischen Eigenschaften des LWL zur Folge hat. Oder man hält die Crimptiefe so gering, daß zwar nur eine geringfügige Beschädigung des Cladding erfolgt, jedoch keine ausreichende Zugfestigkeit mehr gegeben ist.

Bei einer anderen Faserendhülse, die in der DE 44 10 444 A1 beschrieben ist, sind in der Innenbohrung quer verlaufende Verzahnungen vorgesehen, deren scharfe Kanten sich in die LWL-Ummantelung einpressen, wobei das verdrängte Ummantelungsmaterial von Aussparungen zwischen den Verzahnungen aufgenommen werden soll. Die Befestigung der Faserendhülse auf dem LWL erfolgt entweder durch Aufcrimpen oder durch Aufschrauben mittels eines selbstschneidenden Gewindes. Um ein Pistoning zwischen LWL-Ummantelung und LWL-Faserkern zu vermeiden, ist hier allerdings bei der Konfektionierung ein vergleichsweise aufwendiges Hot-Plate-Verfahren erforderlich, bei dem das entmantelte Faserende zur axialen Verankerung am Hülsenende trichterförmig aufgeschmolzen wird.

### Darstellung der Erfindung

Der Erfindung liegt das technische Problem zugrunde, einen Lichtwellenleiter-Steckerhülsen-Verbund zu schaffen, der bei geringer optischer Dämpfung und unter Vermeidung der Pistoning-Problematik eine hohe mechanische Auszugsfestigkeit bietet.

Dieses technische Problem wird erfindungsgemäß von einem Lichtwellenleiter-Steckerhülsen-Verbund mit den Merkmalen des Patentanspruchs 1 gelöst.

Der erfindungsgemäße Verbund beinhaltet einen Lichtwellenleiter (LWL), der aufgebaut ist aus einem polymeroptischen Faserkern mit einer darauf befindlichen Reflexionsgrenzschicht (Cladding) und einer mit der Reflexionsgrenzschicht und damit dem Faserkern verbundenen Kunststoff-Schutzschicht (Inner Jacket). Gegebenenfalls ist die Kunststoff-Schutzschicht noch mit einer abisolierbaren Kunststoff-Ummantelung (Guter Jacket, Mantel) umgeben. Derartig aufgebaute LWL sind als Spezial-Ausführungen bekannt.

Der polymeroptische Faserkern besteht in der Regel aus PMMA (Polymethylmetacrylat) oder aus PC (Polycarbonat). Die Reflexionsgrenzschicht - häufig als Cladding bezeichnet - besteht aus einem Polymer mit höherem Brechungsindex als der Faserkern und ist bekanntermaßen für die Totalreflexion der im Faserkern geführten Lichtwellen erforderlich. Die nichttrennbar auf das Cladding aufgebrachte Kunststoff-Schutzschicht - auch als Inner Jacket bezeichnet - besteht aus Kunstharz, einem Polymermaterial oder ggfs. aus einem Lack oder dergleichen. Die abisolierbare Ummantelung dient als chemischer und mechanischer Schutzmantel und besteht je nach den konkreten Anforderungen und Einsatzbedingungen aus PA (Polyamid), PE (Polyethylen), PVC (Polyvinylchlorid) oder dergleichen.

Die Aufbringung der Kunststoff-Schutzschicht (Inner Jacket) auf die Reflexionsgrenzschicht (Cladding) ist so ausgeführt, daß die Kunststoff-Schutzschicht nicht für eine Abisolierung oder Entfernung vorgesehen ist. Vielmehr ist sie durch einen Haftsitz gut mit der Reflexionsgrenzschicht verbunden. Eine Entfernung der Kunststoff-Schutzschicht würde also - im Gegensatz zu einer üblichen Abisolierung - einen deutlich höheren Kraftaufwand erfordern und dabei in der Regel auch zu einer Beschädigung der Reflexionsgrenzschicht bzw. des Faserkerns führen.

Im Gegensatz zu dem zuvor beschriebenen LWL-Aufbau, wie er für die Erfindung vorgesehen ist, gibt es auch einen LWL-Aufbau, bei dem die Reflexionsgrenzschicht des Faserkerns mit einer zweischichtigen Kunststoff-Ummantelung umgeben ist, die als Ganzes zur Abisolierung vorgesehen ist. Eine derartige zweischichtige Ummantelung besteht aus einem inneren Primär- und einem äußeren Sekundärmantel. Der äußere Sekundärmantel ist dabei in der Regel aus farbigem Kunststoff hergestellt, um den LWL für die spätere Konfektionierung zu kennzeichnen. Insbesondere, wenn der Kunststoff des Sekundärmantels in einer helleren Markierungsfarbe ausgeführt ist, könnte jedoch evtl. Umgebungslicht durch den Sekundärmantel hindurch in den Faserkern eindringen. Daher ist zusätzlich der innere Primärmantel, beispielsweise aus schwarzem Kunststoff, als Sperrschicht für Umgebungslicht vorhanden. Eine derartige zweischichtige Ümmantelung entspricht also nicht dem erfindungsgemäß vorgesehenen Aufbau aus Schutzschicht (Inner Jacket) mit Haftsitz und abisolierbarer Ummantelung (Guter Jacket), sondern stellt lediglich eine zweischichtige Ausgestaltung der abisolierbaren Ummantelung dar, wobei die beiden Schichten in der Regel fest miteinander verbunden sind. Auch erfindungsgemäß ist es möglich, bei Bedarf die abisolierbare Ummantelung zweischichtig auszuführen. Eine einfachere Möglichkeit zur Farbkennzeichnung besteht jedoch darin, die abisolierbare Ummantelung farbig auszubilden und die Schutzschicht (Inner Jacket) aus lichtundurchlässigem Kunststoff, z.B. schwarzem Kunststoff, herzustellen.

Weiterhin umfaßt der erfindungsgemäße Verbund eine Steckerhülse, die am zuvor erläuterten LWL einen Endabschnitt umgreift, an dem die LWL-Schutzschicht (Inner Jacket) freiliegt, d.h. ggfs. ist die Ummantelung abisoliert. Die Steckerhülse weist einen Befestigungsabschnitt mit einem im Inneren der Hülse vorgesehenen Halteprofil auf. Der Befestigungsabschnitt ist auf die LWL-Schutzschicht aufgepreßt, so daß das Halteprofil in die Schutzschicht eingreift. Dadurch ist die Steckerhülse auf der LWL-Schutzschicht, also dem Inner Jacket, verankert, wobei das Halteprofil nicht in die LWL-Reflexionsschicht, also das Cladding eingreift.

Durch diesen erfindungsgemäßen Verbund aus Steckerhülse und Lichtwellenleiter erhält man hohe Auszugskräfte, d.h. der LWL ist zuverlässig mechanisch in der Steckerhülse verankert und ein Herausziehen des LWL aus der Hülse bei der weiteren Handhabung oder unter den im Betrieb auftretenden mechanischen Belastungen wird wirkungsvoll vermieden. Dadurch, daß das Halteprofil des Befestigungsabschnitts der Steckerhülse in die Schutzschicht des LWL eingepreßt ist, liegt eine formschlüssige Verankerung zwischen Faserkern und Steckerhülse vor. Denn die Schutzschicht ist untrennbar mit dem Cladding und somit mit dem Faserkern verbunden, so daß keine nachträgliche Relativverschiebung zwischen Faserkern/ Cladding und Schutzschicht stattfinden kann. Folglich ist die präzise Ausrichtung der LWL-Endfläche in der Steckerhülse dauerhaft sichergestellt. Eine eventuell auftretende Verschiebung der ggfs. zusätzlich vorhandenen abisolierbaren äußeren Ummantelung in bezug auf den mit der Schutzschicht versehenen Faserkern ist bei der erfindungsgemäßen Lösung unproblematisch, da der Faserkern von der Steckerhülse direkt an seiner Schutzschicht gegriffen wird und so der Faserkern trotzdem richtig positioniert bleibt. Da bei dem erfindungsgemäßen Verbund das Halteprofil in die Schutzschicht und nicht in die Reflexionsschicht (Cladding) des LWL eingreift, werden die optischen Eigenschaften des LWL durch das Aufpressen der Steckerhülse kaum beeinträchtigt und man hat nur eine sehr geringe optische Dämpfungszunahme.

Der Lichtwellenleiter-Steckerhülsen-Verbund kann dann in einem Steckerumgehäuse, in der Regel einem Kunststoffgehäuse, festgelegt werden, z.B. auch zusammen mit weiteren, mit Steckerhülsen vorkonfektionierten Lichtwellenleitern.

Für den Fall, daß der LWL - wie bereits erläutert - mit einer abisolierbaren Ummantelung versehen ist, ist es zweckmäßig, daß sich die am abisolierten Endabschnitt aufgepreßte Steckerhülse mit einem Hülsenbereich noch bis über einen benachbarten ummantelten LWL-Abschnitt erstreckt. So wird das konfektionierte LWL-Ende von der Steckerhülse vollständig eingefaßt und geschützt. In einer Ausführungsvariante weist der genannte Hülsenbereich ebenfalls einen Befestigungsabschnitt mit einem innenliegenden Halteprofil auf. Dieser Befestigungsabschnitt wird auf die Ummantelung aufgepreßt, so daß das Halteprofil in die Ummantelung eingreift. Man hat dann also zwei separate Befestigungsabschnitte, einen zum Eingriff in die LWL-Schutzschicht und einen benachbarten zum zusätzlichen Eingriff in die LWL-Ummantelung. Dadurch kann die Auszugsfestigkeit des LWL in der Steckerhülse weiter gesteigert werden, praktisch ohne zusätzliche optische Dämpfungszunahme.

Vorzugsweise ist das Halteprofil (bzw. die beiden Halteprofile) ein Innengewinde, dessen Gewinde abgestumpft ist. Ferner ist die Gewindetiefe vorzugsweise nur zu einem Bruchteil der Nenngewindetiefe ausgebildet. Dadurch erhält man ein Innengewinde mit trapezförmigen Flanken, die eine relativ große Auflagefläche bieten. Auf diese Weise greift das aufgepreßte Halteprofil schonend in die LWL-Schutzschicht ein, ohne daß die darunterliegende Reflexionsgrenzschicht beschädigt wird. Insbesondere ein Durchstechen der Schutzschicht bis hinein in die Reflexionsgrenzschicht kann durch die abgestumpften Gewindeflanken vermieden werden.

Vorzugsweise beträgt der Öffnungswinkel zwischen zwei benachbarten Gewindeflanken ca. 60°. Das Verhältnis von tatsächlich ausgebildeter Gewindetiefe zur Nenngewindetiefe sollte im Bereich von 0,2 - 0,75, bevorzugt im Bereich von 0,2 - 0,5 liegen. Alternativ kann das Halteprofil (bzw. die beiden Halteprofile) in Form von Rillen, Riefen, Noppen, Vorsprüngen, Einkerbungen oder dergleichen ausgebildet sein, um eine gute Rückhaltefunktion in der Eingriffsschicht zu erreichen, ohne daß darunterliegende Schichten in nachteiliger Weise beschädigt werden.

Vorzugsweise wird der Befestigungsabschnitt auf die LWL-Schutzschicht aufgecrimpt, da sich der Crimp-Prozeß mit einer kurzen Taktzeit prozeßsicher realisieren läßt. Falls zusätzlich zum ersten Crimpbereich auf die LWL-Schutzschicht ein zweiter Crimpbereich auf die LWL-Ummantelung vorgesehen ist, kann ein zweistufiger Crimpvorgang durchgeführt werden. Die Crimpung sollte so durchgeführt werden, daß eine möglichst gleichmäßige Verteilung der Crimpkräfte auf den Umfang des LWL gegeben ist, etwa wie es bei einer Stern-, Vierfach-, Sechsfach-Crimpung oder dergleichen der Fall ist.

Die Steckerhülse ist vorzugsweise aus Metall hergestellt, sie kann jedoch auch aus Kunststoff bestehen.

Zweckmäßigerweise weist die LWL-Schutzschicht eine geringere Härte auf als der polymeroptische Faserkern, damit das Aufpressen des Steckerhülsen-Halteprofils nicht den Faserkern deformiert, sondern zu einem Eingriff in die Schutzschicht führt. Die Schutzschicht wird dabei beim Aufpressen der Steckerhülse deformiert, jedoch bleibt der Faserkern praktisch deformationsfrei.

### Kurzbeschreibung der Zeichnungen

Zum besseren Verständnis und zur weiteren Beschreibung wird die Erfindung nachfolgend anhand eines Ausführungsbeispiels mit Bezug auf die beigefügten Zeichnungen näher erläutert. Es zeigen:
- Fig.1: eine schematische Seiten- bzw. Längsschnittansicht eines Ausführungsbeispiels des erfindungsgemäßen Lichtwellenleiter-Steckerhülsen-Verbundes;
- Fig.2: einen vergrößerten Teilausschnitt aus Fig.1;
- Fig.3: eine vergrößerte Querschnittsdarstellung entlang der Schnittlinie A-A in Fig.1;
- Fig.4: ein Diagramm, das für den erfindungsgemäßen Lichtwellenleiter-Steckerhülsen-Verbund schematisch die Relation zwischen Crimptiefe und Dämpfungszunahme sowie Crimptiefe und Auszugskraft darstellt.

### Beschreibung eines Aasführungsbeispiels der Erfindung

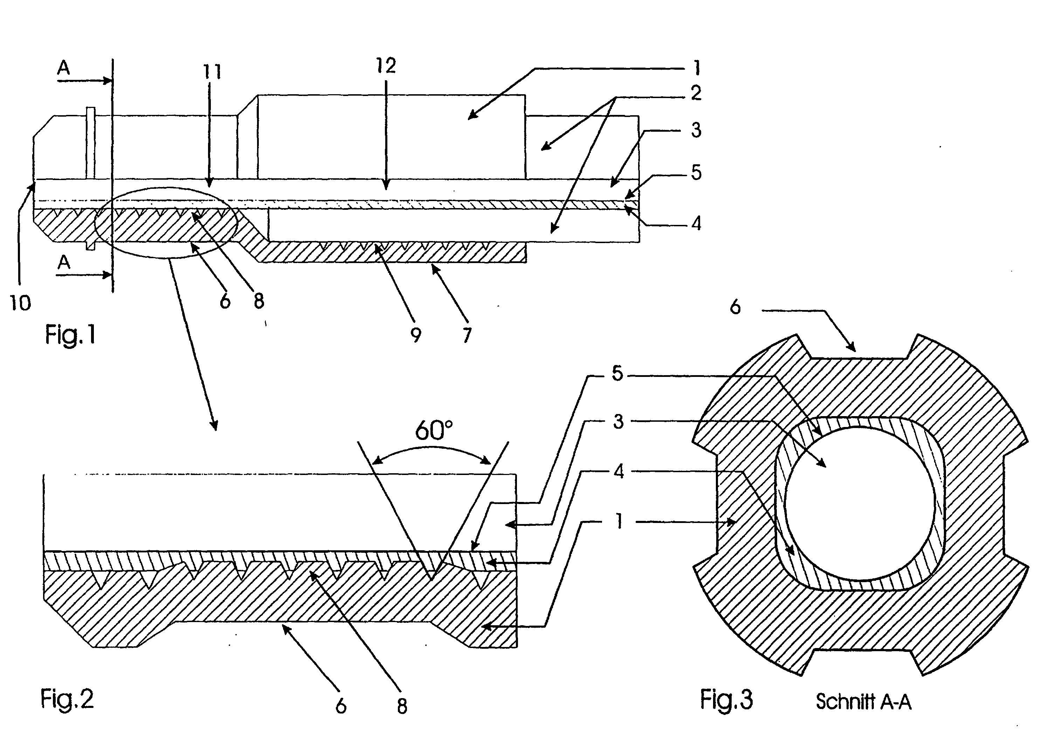

Fig.1 zeigt den Verbund aus einer Steckerhülse 1 und einem Lichtwellenleiter (LWL). Der LWL besteht - von innen nach außen - aus einem polymeroptischen Faserkern 3 mit Cladding 5, einer damit nicht-lösbar verbundenen Schutzschicht (Inner Jacket) 4 und einem diese Schutzschicht umgebenden abisolierbaren Außenmantel 2. Im Beispiel beträgt der. Faserkern-Durchmesser 980 µm und die Cladding-Wandstärke 10 µm, so daß der Durchmesser des Faserkerns 3 mit Cladding 5 1000 µm beträgt. Die Schutzschicht 4 weist im Beispiel eine Wandstärke von 200 µm auf, was einen Gesamtdurchmesser für Faserkern/ Cladding/ Schutzschicht von 1400 µm ergibt. Der Außenmantel 2 hat im Beispiel eine Wandstärke von 400 µm, so daß der ummantelte LWL einen Außendurchmesser von 2200 µm aufweist.

Die einzelnen Schichtdicken können je nach den konkreten Anforderungen variiert werden. So kann z.B. bei gleichem Grunddurchmesser (Faserkern mit Cladding) die Schutzschicht auch noch verringert werden, etwa auf eine Wandstärke von 150 µm. Auch der Außenmantel könnte z.B. auf eine Wandstärke von 300 µm reduziert werden oder aber bei Bedarf auch noch dicker ausgeführt werden als 400 µm.

Die erforderliche Kraft F zum Abisolieren des Außenmantels 2 liegt im Beispiel im Bereich von F < 30 N pro 3 cm LWL-Länge (Abisolierkraft in Richtung der LWL-Längsachse). Dagegen wäre eine Kraft F im Bereich von F > 60 N pro 3 cm LWL-Länge erforderlich, um den Haftsitz der Schutzschicht 4 auf dem Cladding 5 zu überwinden. Dieser Haftsitz verhindert wirkungsvoll ein Pistoning zwischen dem Faserkern 3 mit Cladding 5 und der LWL-Schutzschicht 4, das sonst aufgrund von zulässigen Betriebstemperaturschwankungen (z.B. im Automobilbereich von etwa - 40 °C bis + 85 °C) auftreten könnte.

Von der Endflache 10 des LWL weg ist der Außenmantel 2 entlang eines Endabschnitts 11 abisoliert. Der LWL ist dann in die Steckerhülse 1 eingeschoben, so daß sich die Endfläche 10 am vorderen (in Fig.1 linken) Hülsenende befindet.

Die Steckerhülse 1 ist einstückig aus Metall ausgebildet. Ein vorderer Hülsenabschnitt mit einem ersten Crimpbereich 6 umgreift den abisolierten LWL-Endabschnitt 11 und ein hinterer Hülsenabschnitt mit einem zweiten Crimpbereich 7 umgreift einen zum abisolierten LWL-Endabschnitt 11 benachbarten, ummantelten LWL-Abschnitt 12. Der vordere Hülsenabschnitt ist mit seinem Innendurchmesser an den Außendurchmesser der LWL-Schutzschicht 4 angepaßt und der hintere Hülsenabschnitt mit einem vergrößerten Innendurchmesser an den Außendurchmesser des Außenmantels 2. Die Innendurchmesser der Steckerhülse 1 erlauben dabei ein Einführen des LWL in die Hülse. In den beiden Crimpbereichen 6, 7 sind jeweils Halteprofile 8, 9 in die Innenflächen der Steckerhülse eingebracht. Durch eine Crimpverformung an den Crimpbereichen 6, 7 werden die Halteprofile 8, 9 in den LWL eingepreßt. Im ersten Crimpbereich 6 greift das Halteprofil 8 in die LWL-Schutzschicht 4 ein, um den LWL in der Hülse in seiner Position zu fixieren und ein Wandern der Faser relativ zur Hülse zu verhindern. Im zweiten Crimpbereich 7 greift das Halteprofil 9 in den LWL-Außenmantel 2 ein, um die Auszugsfestigkeit des LWL - zusätzlich zur ersten Crimpverankerung an der Schutzschicht 4 - weiter zu erhöhen. Nach der Crimpverbindung der Hülse mit dem LWL wird die Endfläche 10 des LWL fertigbearbeitet, um hier eine optimale optische Übertragung zu gewährleisten. Die Außenkontur der Steckerhülse 1 ist überwiegend zylindrisch und ist mit Anlage- und Positionierabschnitten versehen, um die Hülse in einem (nicht dargestellten) Steckerumgehäuse festlegen zu können.

Fig.2 veranschaulicht den Crimpbereich 6 in einer vergrößerten Ansicht. Das Halteprofil 8 ist hier als Innengewinde mit einer reduzierten Gewindetiefe ausgeführt, die etwa einem Drittel der Nenngewindetiefe entspricht. Dadurch weist das Halteprofil 8 trapezförmige Flanken mit vergleichsweise großen Auflageflächen auf. Zwischen zwei benachbarten Flanken beträgt der Öffnungswinkel ca. 60°. Durch den Crimpvorgang ist in dem gezeigten Bereich die Wandung der Steckerhülse 1 nach innen verformt und das Halteprofil 8 ist formschlüssig in die LWL-Schutzschicht 4 eingedrückt. Das Halteprofil 8 mit seiner relativ stumpfen Kontur greift dabei nicht in das darunterliegende Cladding 5 und den Faserkern 3 ein.

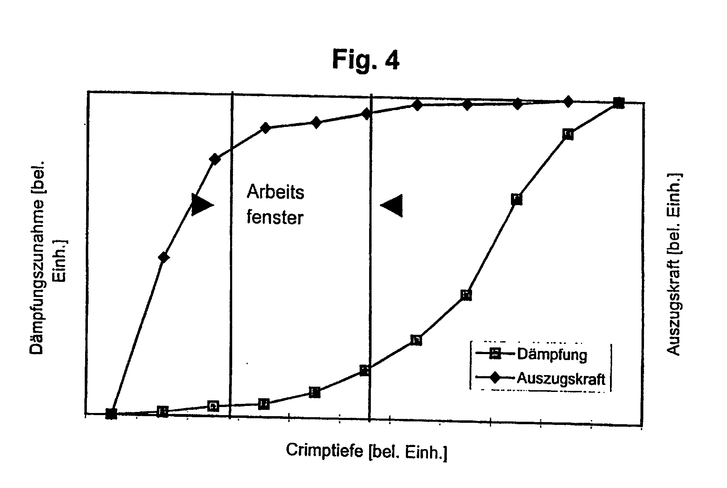

Wie Fig.3 verdeutlicht, greift im Beispiel die Crimpung von vier Seiten (Vierfach-Crimpung) gleichmäßig über den Umfang an der Steckerhülse 1 an und deformiert im Crimpbereich die Hülsenwandung. Auch die LWL-Schutzschicht 4 wird dabei deformiert, jedoch bleibt der Faserkern 3 mit dem Cladding 5 praktisch frei von Deformationen.

Bei dem dargestellten Vierfach-Crimpvorgang wird der ursprünglich kreisrunde Außenquerschnitt der LWL-Schutzschicht 4 zu einem abgerundeten Rechteck-Außenquerschnitt deformiert. Wie aus der Querschnittsansicht in Fig.3 ersichtlich ist, wird also Material der LWL-Schutzschicht 4 aus den Querschnittsbereichen, die unterhalb der Crimpbereiche 6 liegen, in die benachbarten Querschnittsbereiche zwischen den Crimpbereichen 6 verdrängt. Dort bildet das verdrängte Material die abgerundeten Ecken der neu entstandenen Außenkontur der LWL-Schutzschicht aus. Das verdrängte Schutzschichtmaterial weicht also - abgesehen von einem geringfügigen Anteil, der ggfs. in das Halteprofil 8 eindringt (Fig.2) - praktisch vollständig seitlich radial nach außen aus (Fig.3), ohne daß der Faserkern 3 mit seinem Cladding 5 deformiert wird. D.h. Faserkern 3 und Cladding 5 behalten im wesentlichen ihren kreisrunden Querschnitt bei.

Bei dem Crimpvorgang und der damit verbundenen Deformation des Schutzschichtmaterials schmiegt sich die (deformierte) Innenkontur der Steckerhülse 1 fest an die (deformierte) Außenkontur der LWL-Schutzschicht 4 an. Dadurch kommt es entlang des LWL-Längenabschnitts der Crimpung zu einem festen Rundum-Reibschluß zwischen Steckerhülse 1 und LWL-Schutzschicht 4 und somit werden hohe Auszugskräfte für den LWL-Steckerhülsen-Verbund realisiert.

Fig.4 veranschaulicht qualitativ (mit beliebiger Einheit) für den erfindungsgemäßen LWL-Steckerhülsen-Verbund die Zusammenhänge zwischen Crimptiefe, optischer Dämpfungszunahme im LWL und Auszugskraft des LWL aus der Hülse. Das Diagramm bezieht sich dabei auf die Crimpung direkt auf die LWL-Schutzschicht (vgl. Crimpbereich 6 in Fig.1) ohne zusätzliche zweite Crimpung auf den Außenmantel (vgl. Crimpbereich 7). Man erkennt, daß bei zunehmender Crimptiefe die Auszugskraft (obere Kurve) zunächst stark zunimmt und danach nur noch geringfügig steigt. Die optische Dämpfungszunahme im LWL (untere Kurve) aufgrund von Beeinträchtigungen durch die Crimpung fällt bei zunehmender Crimptiefe zunächst gering aus und steigt danach stark an. Somit ergibt sich ein günstiges Arbeitsfenster. Innerhalb dieses (in Fig.4 markierten) Crimptiefen-Bereichs ist zum einen die Auszugskraft hoch und zum anderen die Dämpfungszunahme gering. Außerdem kommt es innerhalb dieses Arbeitsfensters bei einer Variation der Crimptiefe zu keiner nennenswerten Änderung der Auszugskraft und der Dämpfungszunahme. Daher kann der erfindungsgemäße LWL-Steckerhülsen-Verbund prozeßsicher hergestellt werden, da prozeßbedingte Crimptiefenabweichungen innerhalb des Arbeitsfensters toleriert werden können.

## Patentansprüche

1. Lichtwellenleiter-Steckerhülsen-Verbund mit
- einem Lichtwellenleiter-Endabschnitt (11), der aus einem polymeroptischen Faserkern (3) mit einer Reflexionsgrenzschicht (5) und einer darauf aufgebrachten Kunststoff-Schutzschicht (4) besteht, und
- einer Steckerhülse (1), die den Lichtwellenleiter-Endabschnitt (11) umgreift und die einen Befestigungsabschnitt (6) aufweist, der auf die Schutzschicht (4) des Lichtwellenleiter-Endabschnitts (11) aufgepreßt ist, wobei der Befestigungsabschnitt (6) mit einem Halteprofil (8) versehen ist, das in die Schutzschicht (4) eingreift, um die Steckerhülse (1) auf dem Lichtwellenleiter-Endabschnitt (11) zu verankern, ohne dabei in die Reflexionsgrenzschicht (5) einzugreifen. **dadurch gekennzeichnet, daß** der Haftsitz der Kunststoff-Schutzschicht so stark ist, daß im Betrieb keine nachträgliche Relativverschiebung zwischen der Kunststoff-Schutzschicht (4) und der Reflexionsgrenzschicht (5) stattfinden kann.

2. Lichtwellenleiter-Steckerhülsen-Verbund nach Anspruch 1, **dadurch gekennzeichnet, daß** im Anschluß an den Lichtwellenleiter-Endabschnitt (11) der Lichtwellenleiter zusätzlich mit einer abisolierbaren Ummantelung (2) versehen ist, welche die Schutzschicht (4) umgibt, und daß die Steckerhülse (1) sich mit einem Hülsenbereich bis über einen mit der Ummantelung (2) versehenen LichtwellenleiterAbschnitt (12) erstreckt.

3. Lichtwellenleiter-Steckerhülsen-Verbund nach Anspruch 2, **dadurch gekennzeichnet, daß** die Steckerhülse (1) im genannten Hülsenbereich einen weiteren Befestigungsabschnitt (7) aufweist, der auf die Ummantelung (2) des Lichtwellenleiters aufgepreßt ist, wobei der Befestigungsabschnitt (7) mit einem Halteprofil (9) versehen ist, das in die Ummantelung (2) eingreift.

4. Lichtwellenleiter-Steckerhülsen-Verbund nach einem der Ansprüche 1 bis 3, **dadurch gekennzeichnet, daß** das zumindest eine Halteprofil (8, 9) ein Innengewinde ist, dessen Gewinde abgestumpft ist.

5. Lichtwellenleiter-Steckerhülsen-Verbund nach Anspruch 4, **dadurch gekennzeichnet, daß** der Öffnungswinkel zwischen zwei benachbarten Gewindeflanken ca. 60° beträgt.

6. Lichtwellenleiter-Steckerhülsen-Verbund nach einem der Ansprüche 1 bis 3, **dadurch gekennzeichnet, daß** das zumindest eine Halteprofil (8, 9) in Form von Rillen, Riefen, Noppen, Vorsprüngen oder Einkerbungen ausgebildet ist.

7. Lichtwellenleiter-Steckerhülsen-Verbund nach einem der Ansprüche 1 bis 6, **dadurch gekennzeichnet, daß** der zumindest eine Befestigungsabschnitt (6, 7) der Steckerhülse (1) auf den Lichtwellenleiter aufgecrimpt ist.

8. Lichtwellenleiter-Steckerhülsen-Verbund nach einem der Ansprüche 1 bis 7, **dadurch gekennzeichnet, daß** die Kunststoff-Schutzschicht (4) eine geringere Härte aufweist als der polymeroptische Faserkern (3).

## Claims

1. Optical waveguide connector barrel interconnection with
- an optical waveguide end section (11) consisting of a polymeroptic fibre core (3) with a reflection limit layer (5) and a plastics material protective layer (4) applied to it and
- a connector barrel (1) which encompasses the optical waveguide end section (11) and has a fastening section (6) pressed on to the protective layer (4) of the optical waveguide end section (11), wherein the fastening section (6) is provided with a holding profile (8), which engages in the protective layer (4), in order to anchor the connector barrel (1) on the optical waveguide end section (11) without therein engaging in the reflection limit layer (5), **characterised in that** the adhesive fit of the plastics material protective layer is so strong that in operation no subsequent relative displacement between the plastics material protective layer (4) and the reflection limit layer (5) can take place.

2. Optical waveguide connector barrel interconnection according to claim 1, **characterised in that** where it connects to the optical waveguide end section (11) the optical waveguide is additionally provided with a casing (2) from which the insulation can be stripped, surrounding the protective layer (4), and the connector barrel (1) extends with a barrel area to above an optical waveguide section (12) provided with the casing (2).

3. Optical waveguide connector barrel interconnection according to claim 2, **characterised in that** the connector barrel (1) has a further fastening section (7) in the barrel area mentioned, pressed on to the casing (2) of the optical waveguide, wherein the fastening section (7) is provided with a holding profile (9), which engages in the casing (2).

4. Optical waveguide connector barrel interconnection according to one of claims 1 to 3, **characterised in that** the at least one holding profile (8, 9) is an inner thread, the thread of which is blunted.

5. Optical waveguide connector barrel interconnection according to claim 4, **characterised in that** the opening angle between two adjacent thread flanks is approximately 60°.

6. Optical waveguide connector barrel interconnection according to one of claims 1 to 3, **characterised in that** the at least one holding profile (8, 9) is constructed in the form of grooves, furrows, knobs, projections or notches.

7. Optical waveguide connector barrel interconnection according to one of claims 1 to 6, **characterised in that** the at least one fastening section (6, 7) of the connector barrel (1) is crimped on to the optical waveguide.

8. Optical waveguide connector barrel interconnection according to one of claims 1 to 7, **characterised in that** the plastics material protective layer (4) is less hard than the polymeroptic fibre core (3).

## Revendications

1. Ensemble guide d'onde lumineuse - contacts femelles - avec
- une section finale de guide d'onde lumineuse (11), qui se compose d'un coeur de fibre polymère-optique (3) avec une couche limite de réflexion (5) et, appliquée sur celle-ci, une couche de protection en matière synthétique (4), et
- un contact femelle (1), qui enveloppe la section finale du guide d'onde lumineuse (11) et qui présente une section de consolidation (6), la section de consolidation étant pressée sur la couche de protection (4) de la section finale du guide d'onde lumineuse (11), la section de consolidation (6) étant équipée d'un profil d'appui (8) qui pénètre la couche de protection (4) pour ancrer le contact femelle (1) sur la section finale du guide d'onde lumineuse (11), sans pour cela pénétrer la couche limite de réflexion (5), **caractérisé en ce que** l'ajustement appuyé de la couche de protection en matière synthétique est si solide qu'en fonctionnement aucun déplacement relatif de retrait ne peut avoir lieu entre la couche de protection en matière synthétique (4) et la couche limite de réflexion (5).

2. Ensemble guide d'onde lumineuse - contacts femelles selon la revendication 1, **caractérisé en ce qu'**au raccordement avec la section finale du guide d'onde lumineuse (11) le guide d'onde lumineuse est équipé en outre d'une gaine (2) qu'on peut dénuder, qui entoure la couche de protection (4), et **caractérisé en ce que** le contact femelle (1) se prolonge par une zone de contact jusqu'à la section du guide d'onde lumineuse (12) équipée de la gaine (2).

3. Ensemble guide d'onde lumineuse - contacts femelles - selon la revendication 2, **caractérisé en ce que** le contact femelle (1) présente, dans ladite zone de contact, une autre section de consolidation (7) qui est pressée sur la gaine (2) du guide d'onde lumineuse, où la section de consolidation (7) est équipée d'un profil d'appui (9) qui pénètre la gaine (2).

4. Ensemble guide d'onde lumineuse - contacts femelles - selon l'une des revendications 1 à 3, **caractérisé en ce qu'**au moins un des profils d'appui (8, 9) est un filet de vis intérieur, dont le taraudage est aplati.

5. Ensemble guide d'onde lumineuse - contacts femelles - selon la revendication 4, **caractérisé en ce que** l'angle d'ouverture entre deux flancs de filet voisins s'élève environ à 60°.

6. Ensemble guide d'onde lumineuse - contacts femelles - selon l'une des revendications 1 à 3, **caractérisé en ce qu'**au moins un profil d'appui (8, 9) est conçu sous forme de rainures, de cannelures, de nopes, de saillies ou d'encoches.

7. Ensemble guide d'onde lumineuse - contacts femelles - selon l'une des revendications 1 à 6, **caractérisé en ce qu'**au moins l'une des sections de consolidation (6, 7) du contact femelle (1) est sertie crimp sur le guide d'onde lumineuse.

8. Ensemble guide d'onde lumineuse - contacts femelles - selon l'une des revendications 1 à 7, **caractérisé en ce que** la couche de protection en matière synthétique (4) est moins dure que le coeur de la fibre polymère-optique (3).
